Europäisches Patentamt
European Patent Office
Office européen des brevets

(19)

(11) Publication number: **0 358 182 A2**

(12) **EUROPEAN PATENT APPLICATION**

(21) Application number: 89116425.3

(22) Date of filing: 06.09.89

(51) Int. Cl.5: C08F 214/06 , C08F 220/10 , //(C08F214/06,220:10), (C08F220/10,214:06)

(30) Priority: 09.09.88 US 242949

(43) Date of publication of application: 14.03.90 Bulletin 90/11

(84) Designated Contracting States: AT BE CH DE ES FR GB GR IT LI LU NL SE

(71) Applicant: THE B.F. GOODRICH COMPANY
3925 Embassy Parkway
Akron Ohio 44313-1799(US)

(72) Inventor: Greenlee, William Samuel
31626 Electric Boulevard
Avon Lake Ohio 44012(US)
Inventor: Vyvoda, Josef Cyril
287 Greenbriar Drive
Avon Lake Ohio 44012(US)
Inventor: Wypart, Roman Waclaw
125 Ashwood Drive
Avon Lake Ohio 44012(US)

(74) Representative: von Kreisler, Alek, Dipl.-Chem. et al
Patentanwälte Von Kreisler-Selting-Werner
Deichmannhaus am Hauptbahnhof
D-5000 Köln 1(DE)

# (54) An oil resistant thermoplastic elastomer composed of a polyvinyl chloride-acrylate copolymer.

(57) A thermoplastic elastomer is presented which is a composition made from a vinyl chloride type monomer or monomers and acrylate monomers. The elastomer includes an oil resistance agent. The oil resistance agent is one or more acrylate monomers having the formula

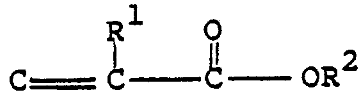

FORMULA I

wherein $R^1$ is aliphatic, aromatic, alkoxy, or combinations thereof, having from 1 to 6 carbon atoms, or halogenated derivatives thereof, or hydrogen; and $R^2$ is aliphatic, aromatic, alkylhydroxyl, or combinations thereof, having from 1 to 18 carbon atoms, or halogenated derivatives thereof; or hydrocarbyl ether such as alkoxyalkyl, phenoxyaryl, phenoxyalkyl, or combinations thereof, having from 1 to 18 carbon atoms or substituted halogen, oxygen, nitrogen or sulfur derivatives thereof, wherein the total number of atoms in $R^2$ is from about 3 to about 80. Optionally, an acrylate monomer which acts as a physical property enhancer is added. Improvements are achieved in the oil resistance of the thermoplastic elastomer and lead to an elastomer which can be used where oil resistance is important, such as in certain types of shoe soles, gaskets, and pipe liners. These improvements are balanced against compression set and brittleness

EP 0 358 182 A2

characteristics.

# AN OIL RESISTANT THERMOPLASTIC ELASTOMER COMPOSED OF A POLYVINYL CHLORIDE-ACRYLATE COPOLYMER

## FIELD OF THE INVENTION

The present invention relates to a thermoplastic elastomer having improved oil resistance. The elastomer is made from one or more vinyl chloride type monomers and an acrylate monomer or monomers which cause the elastomer to be oil-resistant and, optionally, an additional acrylate monomer which acts as a physical property enhancer.

## BACKGROUND ART

U.S. Patent No. 4,210,739 to Gallagher et al discloses a polyvinyl chloride copolymer having 45 to 80 percent by weight vinyl chloride, 15 to 45 percent by weight of $C_2$ to $C_{10}$ alkyl polyacrylate, and 1 to 15 percent by weight of one or more $C_8$ to $C_{22}$ dialkyl maleate and/or fumarate. However, the prior art has not provided a thermoplastic elastomer having the favorable oil resistance of the present composition; an elastomer that is well suited for use in shoes, wire jacketing, gaskets, flooring, and the like.

## SUMMARY OF THE INVENTION

It is therefore an aspect of the present invention to provide an oil resistant thermoplastic elastomer. The composition is made from one or more vinyl chloride type monomers and an oil resistance agent which is one or more acrylate monomers. The acrylate monomers have the general formula:

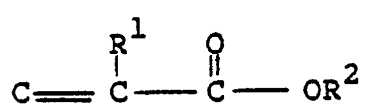

FORMULA I

wherein $R^1$ is aliphatic, aromatic, alkoxy, or combinations thereof, having from 1 to 6 carbon atoms, or halogenated derivatives thereof, or hydrogen; and $R^2$ is aliphatic, aromatic, alkylhydroxyl, or combinations thereof, having from 1 to 18 carbon atoms, or halogenated derivatives thereof; or hydrocarbyl ether such as alkoxyalkyl, phenoxyaryl, phenoxyalkyl or combinations thereof, having from 1 to 18 carbon atoms or substituted halogen, oxygen, nitrogen or sulfur derivatives thereof, wherein the total number of atoms in $R^2$ is from about 3 to about 80.

The vinylchloride type monomers comprise 10 to 90 parts by weight of the monomers contained in the polyvinyl chloride-acrylate copolymer, with the acrylate monomers constituting the difference. The oil resistance agent comprises from about 40 to about 100 percent by weight of the acrylate monomers while a high alkyl acrylate monomer makes up the remainder of the acrylate monomers contained in the copolymer. Suspending agents and initiators are used to polymerize the vinyl chloride type monomers as well as the acrylate type monomers. The oil resistance is measured by an oil swell test, and in particular using ASTM No. D471 using No. 3 Oil at 100°C for 166 hours. Using this standard, a value of 100 or less is desired, with a value of 50 or less being preferred, and a value of 30 or less being most preferred. The thermoplastic elastomer is used in applications where it is desirable to use an oil resistant composition such as in the formation of gaskets or boots.

## DETAILED DESCRIPTION OF THE INVENTION

The present invention relates to an oil resistant thermoplastic elastomer generally in the form of a copolymer made from one or more vinyl chloride monomers and one or more acrylate monomers. When the term "vinyl chloride type monomers" is used to describe the present invention, it is meant a vinyl chloride monomer and, optionally, vinyl component comonomers. By the term "vinyl component comonomer," it is meant a vinyl type monomer other than vinyl chloride. Such monomers are well known to the art and to the literature and include vinyl esters wherein the ester portion contains from 1 to 18 carbon atoms such as vinyl acetate; vinylidene chloride; 1,2-dichloroethylene; styrene and styrene derivatives having a total of from 8 to 15 carbon atoms such as alpha-methylstyrene, vinyl toluene, chlorostyrene, chloromethylstyrene; vinyl naphthalene; diolefins having a total of from 4 to 18 carbon atoms such as butadiene, isoprene, including halogenated diolefins such as chloroprene; monoolefins having from 2 to 18 carbon atoms and preferably 2 to 8 carbon atoms; and the like; and mixtures of any of the above types of monomers and other vinyl monomers copolymerizable therewith known to the art and to the literature. Vinyl acetate is a preferred vinyl component comonomer.

It is preferable not to include a vinyl component comonomer, however, in the event that a vinyl component comonomer is used, an amount of vinyl chloride monomer is utilized to produce a copolymer containing from 50 to 99 percent by weight of the vinyl chloride type monomer unit and preferably from about 80 to about 99 percent by weight of vinyl chloride repeating units therein. The remainder of the copolymer is made up from one or more of the above-noted vinyl component monomers, for example vinyl acetate. Thus, the amount of vinyl component comonomer is from about 1 to about 50 percent and preferably from about 1 to about 20 percent by weight based on the total weight of the vinyl chloride type comonomers.

It is preferable that the vinyl chloride type monomer is exclusively vinyl chloride monomer so that a copolymer of vinyl chloride is produced. The amount of the vinyl chloride type monomer is generally from about 10 to about 90 parts by weight, desirably from about 25 to about 80 parts by weight, and preferably from about 40 to about 65 parts by weight based on the total monomers contained in the polyvinyl chloride-acrylate copolymer.

The acrylate monomer contained in the polyvinyl chloride-acrylate copolymer comprises one or more acrylate monomers which cause the elastomer to be oil resistant and optionally a second acrylate monomer. The acrylate monomers are present in an amount of from about 10 parts to about 90 parts by weight, desirably from about 20 to about 75 parts by weight, and preferably from about 35 to about 60 parts by weight based on the total monomers contained in the polyvinyl chloride-acrylate copolymer.

The acrylate monomer which enhances the oil resistance is termed the "oil resistance agent" herein and has the general formula:

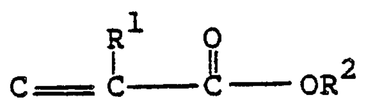

FORMULA I

wherein $R^1$ is aliphatic, aromatic, alkoxy, or combinations thereof, having from 1 to 6 carbon atoms, or halogenated derivatives thereof, or hydrogen; and $R^2$ is aliphatic, aromatic, alkylhydroxyl, or combinations thereof, having from 1 to 18 carbon atoms, or halogenated derivatives thereof; or hydrocarbyl ether such as alkoxyalkyl, phenoxyaryl, phenoxyalkyl, or combinations thereof, having from 1 to 18 carbon atoms, or substituted halogen, oxygen, nitrogen or sulfur derivatives thereof, wherein the total number of atoms in $R^2$ is from about 3 to about 80, or of the formula:

$-(R^3-O)_n-R^4$

where $R^3$ is aromatic or aliphatic or combinations thereof having from 1 to 14 carbon atoms or halogenated derivatives thereof, and $R^4$ is aliphatic or hydroxyalkyl having from 1 to 6 carbon atoms and halogenated derivatives thereof and hydrogen, n is 1 to 12 and the total number of atoms in $R^2$ is equal to or less than 80, and $R^2$ is most preferably alkyl having 1 to 4 carbon atoms. Examples of specific acrylate monomers include ethyl acrylate, propyl acrylate, butyl acrylate, hexyl acrylate, octyl acrylate, 2-ethylhexyl acrylate, nonyl acrylate, decyl acrylate, phenyl acrylate, nonylphenyl acrylate, ethyl methacrylate, butyl methacrylate, hexyl methacrylate, 2-ethylhexyl methacrylate, methoxymethyl acrylate, methoxyethyl acrylate, ethoxyethyl acrylate, butoxyethyl acrylate, ethoxypropyl acrylate, 2(2-ethoxyethoxy)ethyl acrylate, and the like. The oil resistance agent comprises from about 40 to about 100 percent by weight, and preferably from about 55 to about 100 percent by weight of the acrylate monomers.

If it is used, the high alkyl acrylate monomer has from 7 to 18 carbon atoms forming the ester group. It

is preferred that the physical property enhancer has the general formula

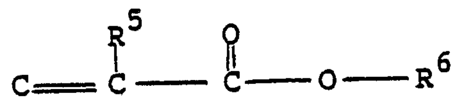

wherein $R^5$ is aliphatic, aromatic, alkoxyl, or combinations thereof, having from 1 to about 8 carbon atoms, or hydrogen; and most preferably alkyl or alkoxy, having from 1 to 2 carbon atoms or hydrogen; and $R^6$ is aliphatic or aromatic or combinations thereof, having from about 7 to about 18 carbon atoms; and most preferably branched aliphatic having from about 7 to about 18 carbon atoms. A specific example is 2-ethylhexyl acrylate. The second monomer comprises from 0 to 60 percent and preferably from 0 to 45 percent by weight of the acrylate monomers.

It is preferable that the weight average molecular weight of the acrylate copolymer formed through the present process is between 20,000 to about 2 million, with from about 50,000 to about 1.5 million being preferred. It is desirable to have a high molecular weight in order to result in the improved oil resistance. The addition of the oil resistant acrylates may result in an undesirable increase in the compression set and an increase in low temperature brittleness properties. It is believed that branched alkyl acrylates improve compression set, such as evidenced in the case of the 2-ethylhexyl acrylate. It is desirable in most applications that the thermoplastic elastomer is flexible as evidenced by a compression set below 60 percent, and preferably below 55 percent, and most preferably below 50 percent as measured by ASTM D395 compression set, Method B at 100° C for 22 hours.

It may also be important in some applications that the elastomer retain flexibility to low temperatures. Examples of such applications include gaskets and shoe soles. The addition of the higher alkyl acrylate lowers the brittleness temperature. Desirable brittleness temperature ranges are below 0° C, preferably below about minus 20° C, and most preferably below about minus 40° C as measured by ASTM D746.

The elastomer of the present invention can be made using conventional polymerization methods such as bulk, suspension, emulsion, dispersion or solution, and preferably using a batch in-situ or a semi-metering suspension polymerization process. A reaction medium, which is preferably water, is added to a reaction vessel. From about 130 to about 190, and preferably from about 140 to about 160 parts of medium per 100 parts total of monomer are added to the reaction vessel. The vessel is evacuated. The appropriate monomers are charged in the appropriate ratios into the vessel. Initiators and dispersants, or suspending agents, are added which will cause or aid in the polymerization of the vinyl chloride type monomers and of the acrylate monomers. The reaction is run at a temperature of about 45° to about 60° C. The polymerization is effected with a free radical initiator. Such initiators include alkanoyl, aroyl, alkaroyl, and aralkanoyl diperoxides and monohydroperoxides, azo compounds, peroxy esters, percarbonates, and other free radical type initiators. Examples of such initiators specifically include benzoyl peroxide, lauryl peroxide, diacetyl peroxide, cumene hydroperoxides, methyl ethyl ketone peroxide, diisopropylbenzene hydroperoxide, 2,4-dichlorobenzoyl peroxide, naphthoyl peroxide, t-butyl perbenzoate, di-2-ethyl-hexyl peroxydicarbonate, di-t-butyl perphthalate, isopropyl percarbonate, t-butyl peroxyneodecanoate, dinormal propyl peroxydicarbonate, azo-bisisobutyronitrile, alpha, alpha′-azodiisobutyrate, 2,2′-azo-bis-(2,4-dimethyl valeronitrile), caprylyl peroxide, cyclohexane sulfonyl peroxide, acetyl cyclohexyl sulfonyl peroxide, hydrogen peroxide, methyl hydroperoxide, ethyl hydroperoxide, propyl hydroperoxide, butyl hydroperoxide, or other alkyl hydroperoxides, di-sec-butyl peroxydicarbonate, isobutyl peroxydicarbonate, and many others. The particular initiator employed will depend upon the monomeric materials being polymerized, the molecular weight and color requirements of the polymer, the temperature of polymerization, etc. Insofar as the amount of initiator employed is concerned, it has been found that an amount in a range of from about 0.005 parts by weight to about 1.00 parts by weight based on 100 parts by weight of the monomer or monomers being polymerized is satisfactory. However, it is preferred to employ an amount of initiator in the range of about 0.01 part by weight to about 0.4 part by weight based on 100 parts by weight of the monomers, i.e., the total weight of the vinyl chloride type monomers and the acrylate monomers.

It is further advantageous to add a small amount of dispersant to the liquid reaction media. The purpose of the dispersant is to obtain a more complete and uniform dispersal of the monomers and initiator throughout the reaction media prior to and during the polymerization of the monomers. Any of the well known dispersants operative in aqueous medium can be employed. These include among others, methyl cellulose, hydroxyl propyl methyl cellulose, polyvinyl alcohol, dodecylamine hydrochloride, sodium lauryl sulfonate, lauryl alcohol, sorbitan monolaurate, polyoxyethylene, nonylphenoxy polyoxyethylene ethanol, hydrolyzed polyvinyl acetates, polyacrylic acid polymers, polyethylene oxide containing surfactants and

non-polyethylene oxide containing surfactants, etc. The amount of dispersant employed will be in the range of about 0.01 percent to about 1.0 percent by weight, based on the weight of the monomers, to give satisfactory results. Preferably, however, the dispersant is employed in the range of about 0.02 to about 0.4 percent by weight.

An example of a preferred polymerization process to produce the thermoplastic elastomers of the present invention is described as follows. Water is added to the reaction vessel in an amount of 100 to 200 parts and preferably 130 to 190 parts per 100 parts monomer. The monomers are charged into the vessel with an initiator or suspending agent. An initiator is used for the reaction which will cause polymerization of the acrylate monomers as well as the vinyl chloride monomers.

The preferred suspension polymerization process to produce the polyvinyl chloride polymers of this invention may be carried out at any temperature which is normal for the monomeric material to be polymerized. Preferably, a temperature in the range of from about 0 °C to about 100 °C is employed, more preferably from about 40 °C to about 85 °C and most preferably from about 45 ° to about 60 °C. In order to facilitate temperature control during the polymerization process, the reaction medium is kept in contact with cooling surfaces cooled by water, brine, evaporation, etc. This is accomplished by employing a jacketed polymerization reactor wherein the cooling materials are circulated through the jacket throughout the polymerization reaction. This cooling is necessary since most all of the polymerization reactions are exothermic in nature. It is understood, of course, that a heating medium can be circulated through the jacket, if necessary.

The elastomer of the present invention may also be made using a semi-metering process wherein the monomers are added stepwise. In the semi-metering process, demineralized water, dispersants and an initiator are charged into the reactor. Acrylic esters and vinyl chloride are charged into the premix tank, where the monomers are premixed and preheated to polymerization temperature. The mixture of the monomers is then transferred into the reactor and agitated steadily from 200 to 800 RPM while maintaining a steady temperature inside the reactor ranging from 40 ° to 70 °C. From fifteen minutes to three hours from the beginning of the polymerization an acrylate monomer or mixture of monomers are metered ino the reaction vessel over a period of one to five hours. An amount of 2 to about 60 percent of the total amount of acrylic monomers can be metered. At the end of the polymerization, usually at 70 to 95 percent conversion, additional vinyl chloride may be injected into the reactor in an amount of from about 5 to about 25 percent of the total vinyl chloride monomer charged in order to eliminate residual acrylate monomers and increase the hardness of the resin particles. Residual monomers are steam stripped from the resin particles. Antiblocking agents may be added before the stripping operation in order to protect resin particles from stickiness.

The polyvinyl chloride-acrylate copolymer desirably is not crosslinked so that it has good processing properties. However, it is to be understood that it is within the ambit of the present invention to either partially crosslink or crosslink the polyvinyl chloride-acrylate copolymer to provide improved physical properties. Should the polyvinyl chloride-acrylate copolymer be crosslinked or cured, any conventional crosslinking agent can be utilized such as diallyl phthalate, various diacrylates such as butanediol diacrylate, diethylene glycol diacrylate, and the like.

The compositions of the present invention can also contain conventional additives in conventional amounts. Thus, various heat stabilizers such as barium/cadmium compounds, lead compounds, and organotin compounds, various conventional lubricants such as paraffin, polyethylene, stearic acid, various processing aids such as polyacrylates, various antioxidants such as BHT, that is butylated hydroxy toluene, BHA, that is butylated hydroxy anisole, various hindered phenols, various UV inhibitors such as substituted benzophenones, and the like, can be utilized.

Various fillers and pigments can also be utilized in conventional amounts such as up to about 200 or 300 parts by weight for every 100 parts by weight of the polyvinyl chloride-acrylate copolymer. Examples of fillers include calcium carbonate, clay, silica, the various silicates, talc, carbon black, and the like. Such fillers are generally added in high amounts as from about 10 to about 200 parts by weight for every 100 parts by weight of the polyvinyl chloride-acrylate copolymer. Examples of various pigments include titanium dioxide, carbon black, and the like. Generally, the amount of such pigment is not as large as the amount of the fillers.

The various additives, fillers, pigments, and the like, along with the plasticizers or blending agent, are generally added and blended in any conventional manner. For example, the polyvinyl chloride-acrylate copolymer can be blended with the various additives in a Banbury mixer and then processed on a two-roll mill to produce a sheet which can be cubed and then extruded, injection molded, etc. The polyvinyl chloride-acrylate copolymer can also be mixed with the various additives in a high intensity mixer such as a Henschel mixer and then this powder compound can be processed on a two-roll mill into a sheet and cubed

or the powder compound can be processed on an extruder into pellets or into the finished article. In general, any conventional means of compounding such as a Banbury mixer, two-roll mill, extruder, injection molding machine, etc., can be used to produce the products of this invention.

The compositions of the present invention provides excellent oil resistance as well as compression set. This oil resistance is demonstrated by an oil swell of 100 percent or less, and preferably 50 percent, and most preferably 30 percent or less by volume as measured using ASTM No. D471 with ASTM No. 3 Oil after immersion at 100 °C for 166 hours. The oil resistant polymers produced by the present invention can be used in a variety of applications where parts produced by injection molding, extrusion, calendering, compression molding, and the like, are subjected to oils or fats. Examples of the following would include the production of oil-resistant shoe soles such as are used in dairy production. Other applications of the elastomer include gaskets, pit and pond liners, flooring, upholstery, hoses, tubing, automotive trim, bumpers, wire and cable jacketing and insulation, gloves, tool handles, drum liners, etc.

The invention will be better understood by reference to the following examples.

## EXAMPLE 1

The polymerization vessel was charged with the following ingredients:

| | |
|---|---|
| Water | 2085 g. |
| Vinyl chloride monomer | 685 g. |
| 2-ethylhexyl acrylate | 228 g. |
| n-butylacrylate | 228 g. |
| Polyvinyl alcohol dispersant (1) | 16.5 g. |
| of 6.9% a water solution | |
| Polyvinyl alcohol dispersant (2) | 25.1 g. |
| of 2.3% a water solution | |
| Substituted cellulose dispersant | 19.6 g. |
| of 2.9% a water solution | |
| Initiator | 0.43 g. |

The vessel was first charged with water and then followed by the dispersants. After evacuation, the mixture of monomers was added and after the mixing of the contents, the temperature was adjusted to 55 °C. Lastly, the initiator was added and the reaction started. The polymerization was carried out for 420 minutes, after which time, the reactor was cooled to room temperature. The polymer was transferred to a stripping vessel to remove unreacted monomers. After stripping, the polymer was recovered by filtration and drying. About 1014 grams of polymer was obtained in the form of a white powder.

The resins (except for Geon 30) prepared by the methods described above plus plasticizer (Geon 30 only), stabilizer, costabilizer, lubricant, filler (except 829LI) and antioxidant (except 829LI) were blended on a 6" x 13" laboratory mill with a roll temperature of 320 °F for 10 minutes (except resin 829LI was blended for 7 minutes) after banding. The samples were formed into a sheet and the milled sheet was cut into 6" x 6" plaques. These plaques were pressed at 320 °F (350 °F for 829LI) using a two-minute preheat (3 minutes for 829LI) and a three minute (5 minutes for 829LI) press cycle. The compression molded plaques were then tested and the results are reported in Table I.

The results in Table I illustrate that increasing levels of the short chain acrylate (butyl acrylate) versus the longer chain 2-ethylhexyl acrylate gives a product with significantly improved oil resistance and acceptable compression set.

Samples of Resins 1470 and 1474 in Table I were compression molded and were examined by optical microscope at 850 x magnification and transmission election microscopy (TEM). The samples were found to be heterogeneous.

TABLE I

| | | | ASTM D-395 | ASTM D-471 |
|---|---|---|---|---|
| | 2-EHA/n-BA | ASTM D746 | METHOD B | ASTM #3 OIL |
| | FEED CONCENTRATION | BRITTLENESS | COMPRESSION SET | % VOLUME SWELL |
| RESIN NO. | (PHM) | TEMPERATURE °C | 100 °C/22 HRS. | 100 °C/166 HRS. |
| GEON 30[1] | 80 PHR DOP | -42.5 | 81.3 | -29.4 |
| 3581 CONTROL[1] | 40/0 | -32 | 45.8 | 171 |
| 857LI[1] | 35/5 | -32 | 48.4.3 | 134 |
| 1470LI[1] | 30/10 | -34 | 51.6 | 103 |
| 1474LI[1] | 20/20 | -25 | 53.9 | 62.5 |
| 829LI[2] | 0/40 | -14 | - | 6.9 |

1. Compound also contains stabilizer 5, costabilizer 3, filler 8, antioxidant 0.5 and lubricant 0.5

2. Compound also contains stabilizer 1.11, costabilizer 5.56, lubricant 0.11.

## EXAMPLE 2

Suspension polymerized thermoplastic elastomer resin was made in a 55 liter reactor using the following procedure. 2280 grams of 2-ethylhexyl acrylate and 4100 grams of n-butyl acrylate were charged into 40 liter premix tank. The premix tank was closed and evacuated. Then, 10,000 grams of vinyl chloride was charged. The monomers were premixed and preheated to 50 °C. 26,500 grams of demineralized water was added into the reactor. 360 grams of 5.3 percent solution of PVA dispersant (1), 400 grams of 2.3 percent solution of substituted cellulose, and 0.06 phm (14.5 grams) of initiator dispersed in 170 grams of 5.3 percent PVA dispersant (2) solution were added to the reactor. The reactor was closed and evacuated. Then, the mixture of monomers was transferred into the reactor with the agitator running. The reactor was heated to 50 °C. Soon after the start of reaction, metering of 1820 g. of n-butyl acrylate was started and this continued over 60 minutes. Near the end of reaction, 1820 grams of vinyl chloride was injected and polymerization continued to 540 minutes. Then the polymerization was stopped by addition of a short-stop. The charge was cooled, transferred to a stripping vessel and then stripped at 80 °C for 30 minutes. The polymer was obtained in the form of a white powder.

The resin, as prepared above, was compounded with the addition of a stabilizer, antioxidants, lubricants and a pigment using a laboratory size (OOC) Banbury mixer and then placed on an 8x16 inch two-roll mill with a mill temperature of 165 °C for 3 minutes. The product was removed from the mill as a 0.085 inch thick sheet and was cut into 6x6 inch plaques. These plaques were pressed at 350 °F using a 5 minute preheat and a 5 minute press to give a 6 inch x 6 inch x 0.075 inch plaque. These plaques were then submitted for physical testing and the results are given in Table II.

The results in Table II indicate this resin has good oil resistance as well as acceptable low temperature brittleness properties and compression set properties.

TABLE II

| | 1 |
|---|---|
| Hardness (Shore A) | A-63 |
| Compression Set (22 hrs.-100 °C) (%) | 57.0 |
| Compression Set (22 hrs.-RT (%) | 43.4 |
| Tensile strength (psi) | 1,120 |
| Tensile strength-100% (psi) | 310 |
| Elongation (%) | 322 |
| Tensile Modulus (psi) | 406 |
| Clash-Berg Modulus (psi) (@-35 °C) | 102,200 |
| Clash-Berg Stiffness (°C @45 M psi) | -19 |
| Brittleness Temperature (°C) ASTM D746 | -19.5 |
| Specific Gravity (g/cm$^3$) | 1.183 |
| Taber Abrasion (g/1,000 cycles/1,000g load and H-18 wheel) | .142 |
| Oil Immersion (% Vol. Swell) ASTM D471 ASTM Oil #3 | 69.3 |
| Melt Index at 185 °C, 21,600g | 0.38 |

EXAMPLE 3

A similar polymerization was performed as was described in Example 1 having the following recipe

| | Parts |
|---|---|
| Vinyl chloride | 60 |
| 2-ethylhexyl acrylate | 30 |
| 2-(2-ethoxyethoxy) ethyl acrylate | 10 |
| Polyvinyl alcohol dispersant (1) | 0.1 |
| Substituted cellulose dispersant | 0.05 |
| Polyvinyl alcohol dispersant (2) | 0.05 |
| Initiator | 0.04 |

The resulting resin was compounded similarly to that described in Example 2 except that the step using the Banbury mixer was eliminated and the processing and pressing conditions were adjusted accordingly. Additionally the ingredients were varied such as by the addition of filler.

The sample was tested for oil resistance using ASTM D471 with ASTM No. 3 Oil; compression set ASTM D-395, Method B; and low temperature brittleness ASTM D-746 and the results are set forth below.

| | |
|---|---|
| Low Temperature Brittleness °C | -14.5 |
| Compression set at 100 °C/22 hrs. (%) | 62.8 |
| Oil Immersion, % Volume Swell, 100 °C/166 hrs. | 22.0 |

While in accordance with the Patent Statutes, the best mode and preferred embodiment has been set forth, the scope of the invention is not limited thereto, but rather by the scope of the attached claims.

**Claims**

1. An oil resistant thermoplastic elastomer made from about 10 to about 90 parts by weight of a vinyl

chloride type monomer comprising a vinyl chloride monomer and optionally one or more of a vinyl component comonomer; and

from about 10 to about 90 parts by weight of an oil resistance agent comprising one or more acrylate monomers of the general formula

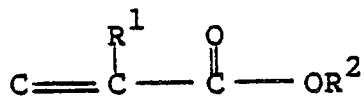

FORMULA I

wherein $R^1$ is aliphatic, aromatic, alkoxy, or combinations thereof, having from 1 to 6 carbon atoms, or halogenated derivatives thereof, or hydrogen; and $R^2$ is aliphatic, aromatic, alkylhydroxyl, or combinations thereof, having from 1 to 18 carbon atoms, or halogenated derivatives thereof; or hydrocarbyl ether such as alkoxyalkyl phenoxyaryl, phenoxyalkyl, or combinations thereof, having from 1 to 18 carbon atoms or substituted halogen, oxygen, nitrogen or sulfur derivatives thereof whereas the total number of atoms in $R^2$ is from about 3 to about 80 carbon atoms, all parts being based on the total weight of monomers contained in the elastomer.

2. An oil resistant thermoplastic elastomer according to Claim 1, wherein said elastomer further comprises a physical property enhancer comprising an acrylate monomer having from about 7 to about 18 carbon atoms in the ester portion.

3. An oil resistant thermoplastic elastomer as set forth in Claim 1 wherein $R^1$ is selected from the group comprising alkyl, alkoxy, or combinations thereof, having from 1 to 4 carbon atoms or hydrogen, and $R^2$ is selected from the group comprising alkyl, alkoxy, phenoxy, having from 1 to about 18 carbon atoms, or having the formula

$-(R^3-O)_n-R^4$

where $R^3$ is selected from the group comprising aliphatic or aromatic or combinations thereof, having 1 to 6 carbon atoms, or halogenated derivatives thereof, and $R^4$ is aliphatic or hydroxylalkyl having from 1 to 14 carbon atoms, or halogenated derivatives thereof, or hydrogen, and n is from 1 to 12 and the total number of atoms in $R^2$ is equal to or less than 80.

4. An oil resistant thermoplastic elastomer according to Claim 2, wherein the oil resistance agent comprises butyl acrylate.

5. An oil resistant thermoplastic elastomer as set forth in Claim 2 wherein the physical property enhancer has the general formula

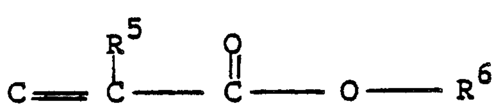

wherein $R^5$ is aliphatic, aromatic, alkoxy or combinations thereof, having from 1 to 8 carbon atoms, or hydrogen, and $R^6$ is aliphatic or aromatic, or combinations thereof, having from 7 to 18 carbon atoms.

6. An oil resistant thermoplastic monomer according to Claim 2, wherein the physical property enhancer comprises 2-ethyl-hexyl acrylate.

7. A thermoplastic elastomer made from one or more vinyl chloride type monomers, said vinyl chloride type monomers including vinyl chloride monomers and optionally a vinyl chloride component comonomer, an acrylate monomer of the formula

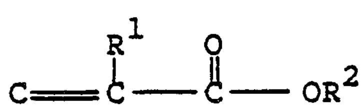

FORMULA I

wherein $R^1$ is aliphatic, aromatic, alkoxy, or combinations thereof, having from 1 to 6 carbon atoms, or halogenated derivatives thereof, or hydrogen; and $R^2$ is aliphatic, aromatic, alkylhydroxyl, or combinations thereof, having from 1 to 18 carbon atoms, or halogenated derivatives thereof; or hydrocarbyl ether such as alkoxyalkyl, phenoxyaryl, phenoxyalkyl, or combinations thereof, having from 1 to 18 carbon atoms or substituted halogen, oxygen, nitrogen or sulfur derivatives thereof, wherein the total number of atoms in $R^2$ is from about 3 to about 80 atoms; and

said elastomer having a percent volume swell of 100 percent or less as measured by ASTM D471 using ASTM No. 3 Oil at 100°C for 166 hours.

8. A thermoplastic elastomer according to Claim 7, further comprising from about 0 to about 60 percent of a second acrylate monomer which acts to enhance the properties of the elastomer and which has from about 7 to about 18 carbon atoms in the alkyl portion of the ester.

9. A thermoplastic elastomer according to Claim 7, wherein said acrylate monomer comprises butyl acrylate monomer.

10. A thermoplastic elastomer according to Claim 9, wherein said second acrylate monomer is 2-ethylhexyl acrylate monomer.

11. A thermoplastic elastomer according to Claim 10, wherein the percent volume swell is 50 percent or less as measured by ASTM D471 using ASTM No. 3 Oil at 100°C for 166 hours.

12. A thermoplastic elastomer according to Claim 10, wherein the composition has a compression set of less than 60 percent as measured by ASTM D395 Method B at 100°C for 22 hours.